# EUROPEAN PATENT APPLICATION

(11) **EP 4 793 670 A1**
(43) Date of publication of application: **19.08.2026**
(21) Application number: 25769266.5
(22) Date of filing: 03.03.2025
(51) Int. Cl.: G01S 19/37, G01S 19/43

(54) **POSITIONING DATA PROCESSING METHOD AND APPARATUS, AND DEVICE AND STORAGE MEDIUM**

(30) Priority: 14.03.2024 CN 202410295630
(71) Applicant: Tencent Technology (Shenzhen) Company Limited, Shenzhen, Guangdong 518057 (CN)
(72) Inventor: ZHANG, Qiang, Shenzhen, Guangdong 518057 (CN)
(74) Representative: EP&C
(86) International application number: PCT/CN2025/080118
(87) International publication number: WO 2025/190094

(57) **Abstract**

A positioning data processing method and apparatus, and a device and a storage medium. The method comprises: acquiring a plurality of sets of raw observation data from a preset type of smart terminal (S11); mapping to one index navigation positioning information in each set of raw observation data (S12); for each index, performing anomaly detection to remove abnormal data from at least two sets of raw observation data, which are selected from the raw observation data associated with the index and have a signal-to-noise ratio greater than a first set threshold, so as to obtain an observation data subset, and on the basis of the number of times when each signal-to-noise ratio in the observation data subset appears therein, obtaining statistical features of signal-to-noise ratios in the observation data subset(S13); and using the observation data subset and the statistical features to adjust a pre-constructed stochastic model, and determining the value of at least one model parameter of the stochastic model (S14), wherein the value of the at least one model parameter is provided and used for configuring a stochastic model in the preset type of smart terminal, which stochastic model is used for positioning.

## Description

### RELATED APPLICATION

This application claims priority to Chinese Patent Application No. 202410295630.X, filed with the China National Intellectual Property Administration on March 14, 2024 and entitled "POSITIONING DATA PROCESSING METHOD AND APPARATUS, DEVICE, AND STORAGE MEDIUM", which is incorporated herein by reference in its entirety.

### FIELD OF THE TECHNOLOGY

This application relates to positioning technologies, and provides a positioning data processing method and apparatus, a device, and a storage medium.

### BACKGROUND OF THE DISCLOSURE

With the growing demand for location-based services among the public and the rapid development of low-cost navigation chips, high-precision positioning technologies for intelligent terminals have attracted significant attention. In related art, an elevation angle-based weighting mode or an original standard deviation-based weighting mode is usually selected based on a type of an intelligent terminal, to evaluate a weighting parameter of the intelligent terminal, and a stochastic model is selected for the intelligent terminal based on a navigation chip mounted on the intelligent terminal. Then, a real-time kinematic (RTK) positioning model is constructed based on the selected stochastic model and a corrected carrier phase observation value, so that the intelligent terminal provides high-precision positioning services based on the constructed RTK positioning model.

### SUMMARY

Embodiments of this application provide a positioning data processing method and apparatus, a device, and a storage medium, to solve a problem of how to determine a model parameter adapted to a terminal type.

An embodiment of this application provides a positioning data processing method performed by a computer device, the method including:
acquiring a plurality of sets of original observation data from a plurality of intelligent terminals of a preset type, each set of original observation data comprising navigation positioning information generated when the intelligent terminal performs positioning and a signal-to-noise ratio, and the navigation positioning information being information about resources used for positioning;
mapping the navigation positioning information in each set of original observation data to a respective index;
performing anomaly detection, for each index, to remove abnormal data from at least two sets of original observation data in the original observation data associated with the index, to obtain an observation data subset, and obtaining statistical features of the signal-to-noise ratios in the observation data subset based on an occurrence count of each signal-to-noise ratio in the observation data subset; and
adjusting at least one model parameter of a pre-constructed stochastic model by using the observation data subset and the statistical features, the at least one model parameter being used for configuring a stochastic model for positioning in an intelligent terminal of the preset type.

An embodiment of this application further provides a positioning data processing apparatus, including:
a data collection module, configured to acquire a plurality of sets of original observation data from a plurality of intelligent terminals of a preset type, each set of original observation data including navigation positioning information generated when the intelligent terminal performs positioning and a signal-to-noise ratio, and the navigation positioning information being information about resources used for positioning;
a data processing module, configured to map the navigation positioning information in each set of original observation data to an index;
a feature extraction module, configured to: perform, for each index, anomaly detection to remove abnormal data from at least two sets of original observation data in the original observation data associated with the index, to obtain an observation data subset, and obtain statistical features of the signal-to-noise ratios in the observation data subset based on an occurrence count of each signal-to-noise ratio in the observation data subset; and
a parameter fitting module, configured to adjust at least one model parameter of a pre-constructed stochastic model by using the observation data subset and the statistical features, the at least one model parameter being used for configuring a stochastic model for positioning in an intelligent terminal of the preset type.

An embodiment of this application further provides a computer device, including a processor and a memory, the memory having a program code stored therein, the program code, when executed by the processor, causing the processor to implement the positioning data processing method of the embodiments.

An embodiment of this application further provides a computer-readable storage medium, including a program code, when a program product is run on a computer device, the program code being configured for causing the computer device to implement the positioning data processing method of the embodiments.

An embodiment of this application further provides a computer program product, including computer instructions, the computer instructions, when executed by a processor, implementing the positioning data processing method of the embodiments.

According to the technical solution in the embodiments of this application, the statistical features of the signal-to-noise ratios during positioning of the terminals of this type are extracted from the original observation data generated when the intelligent terminals of the same type perform positioning, and these statistical features are employed to adjust the preset stochastic model, so that the stochastic model can better adapt to positioning characteristics and an actual observation environment of terminals of this type, and the model parameter that is better adapted to intelligent terminals of this type is obtained. When an intelligent terminal of this type performs positioning by using the stochastic model configured with the corresponding model parameter, an obtained positioning result may be more accurate.

### BRIEF DESCRIPTION OF THE DRAWINGS

The accompanying drawings described herein are configured for providing a further understanding of this application, and forming part of this application. Exemplary embodiments of this application and descriptions thereof are configured for explaining this application, and do not constitute any inappropriate limitation to this application. In the accompanying drawings:
FIG. 1A is an exemplary schematic diagram of an application scenario in an embodiment of this application.
FIG. 1B is a logical schematic diagram of determining a model parameter between an intelligent terminal and a server.
FIG. 1C is a schematic flowchart of a positioning data processing method according to an embodiment of this application.
FIG. 1D is a schematic structural diagram of a positioning data processing apparatus according to an embodiment of this application.
FIG. 2A is a schematic flowchart of processing positioning data of an intelligent terminal according to an embodiment of this application.
FIG. 2B is a logical schematic diagram of processing positioning data of an intelligent terminal according to an embodiment of this application.
FIG. 2C is a schematic flowchart of generating an original index pair according to an embodiment of this application.
FIG. 2D is a logical schematic diagram of an occurrence frequency of an original signal-to-noise ratio in an update frequency statistical table according to an embodiment of this application.
FIG. 2E is a schematic flowchart of a unimodality test according to an embodiment of this application.
FIG. 2F is a schematic flowchart of normality test according to an embodiment of this application.
FIG. 2G is a schematic diagram of image distribution of different kurtoses according to an embodiment of this application.
FIG. 2H is a schematic diagram of image distribution of different skewness according to an embodiment of this application.
FIG. 2I is a schematic diagram of distribution of signal-to-noise ratios and calculation results of related feature values according to an embodiment of this application.
FIG. 3A is a schematic flowchart of processing and applying positioning data in a map application according to an embodiment of this application.
FIG. 3B is a logical schematic diagram of processing and applying positioning data in a map application according to an embodiment of this application.
FIG. 4A is a schematic flowchart of processing and applying positioning data in a social application having a positioning function according to an embodiment of this application.
FIG. 4B is a logical schematic diagram of processing and applying positioning data in a social application having a positioning function according to an embodiment of this application.
FIG. 5 is a schematic structural diagram of a positioning data processing apparatus according to an embodiment of this application.
FIG. 6 is a schematic diagram of a hardware structure of a computer device according to an embodiment of this application.
FIG. 7 is a schematic diagram of a hardware structure of another computer device according to an embodiment of this application.

### DESCRIPTION OF EMBODIMENTS

To make objectives, technical solutions, and advantages in embodiments of this application clearer, technical solutions of this application are clearly and completely described below with reference to the accompanying drawings in the embodiments of this application. Apparently, the described embodiments are some embodiments rather than all embodiments of this application. All other embodiments obtained by a person of ordinary skill in the art based on the embodiments described in this application without creative efforts shall fall within the protection scope of the technical solutions of this application.

### 1. Artificial intelligence (AI):

The artificial intelligence refers to a theory, a method, a technology, and an application system that use a digital computer or a machine controlled by the digital computer to simulate, extend, and expand human intelligence, perceive an environment, acquire knowledge, and use the knowledge to obtain an optimal result. In other words, the artificial intelligence is a comprehensive technology in computer science and attempts to understand the essence of intelligence and produce a new intelligent machine that can respond in a manner similar to human intelligence. The artificial intelligence is to study design principles and implementation methods of various intelligent machines, to enable the machines to have functions of perception, reasoning, and decision-making.

An artificial intelligence technology is a comprehensive discipline, and relates to a wide range of fields including both hardware-level technologies and software-level technologies. Basic technologies of the artificial intelligence generally include a sensor, a dedicated artificial intelligence chip, cloud computing, distributed storage, a big data processing technology, a pre-trained model technology, an operating/interaction system, electromechanical integration, and the like. The pre-trained model is further referred to as a large model or a basic model, and may be widely applied to downstream tasks in various directions of the artificial intelligence after fine tuning. Artificial intelligence software technologies mainly include several major directions such as a computer vision (CV) technology, a speech processing technology, a natural language processing technology, and machine learning/deep learning.

With technical research and progress of artificial intelligence, the artificial intelligence is studied and used in many fields, for example, common smart home, smart customer service, virtual assistance, smart speakers, intelligent sales and marketing, unmanned driving, autonomous driving, robots, and intelligent medical. It is believed that with the development of the technologies, the artificial intelligence may be applied to more fields and play an increasingly important role.

### 2. Machine learning:

Machine learning is a multi-field inter-discipline, and relates to a plurality of disciplines such as a probability theory, statistics, an approximation theory, convex analysis, and an algorithm complexity theory. The machine learning specializes in studying how a computer simulates or implements a human learning behavior to obtain new knowledge or skills, and reorganize an existing knowledge structure, to keep improving the performance.

The machine learning is the core of artificial intelligence and a basic way to make the computer intelligent, and is applied to various fields of artificial intelligence, including technologies such as deep learning, reinforcement learning, transfer learning, inductive learning, and teaching learning. The pre-trained model is a latest development result of deep learning, and combines the foregoing technologies.

### (3) Autonomous driving technology:

An autonomous driving technology refers to voluntary driving of a vehicle without an operation by a driver. The autonomous driving technology usually includes high-precision maps, environment perception, computer vision, behavior decision-making, path planning, motion control, and the like. Autonomous driving includes various development paths such as vehicle intelligence, vehicle-road cooperation, and cloud control over the Internet. The autonomous driving technology has a wide application prospect, and is currently applied to fields such as logistics, public transportation, taxis, and intelligent transportation. The application fields may be further developed in the future.

With research and progress of artificial intelligence technologies, the artificial intelligence technologies are researched and applied to various fields, such as common smart home, smart wearable devices, virtual assistants, smart speakers, intelligent marketing, unmanned driving, autonomous driving, unmanned aerial vehicles, digital twins, virtual humans, robots, artificial intelligence generated content (AIGC), conversational interaction, intelligent medical, intelligent customer service, and game AI. With the development of the technology, the artificial intelligence technology may be applied to more fields, and plays an increasingly important role.

### 4. Global Navigation Satellite System (GNSS):

The global navigation satellite system is a space-based radio navigation positioning system that can provide all-weather three-dimensional coordinates, velocity, and time information to a user at any place on the surface of the Earth or near-ground space, including satellite navigation systems such as Global Positioning System (GPS), BeiDou Navigation Satellite System (BDS), GLONASS, and Galileo satellite navigation system. Currently, the satellite navigation systems are widely used in various fields such as navigation, communication, surveying and mapping, time synchronization, consumer entertainment, vehicle management, automotive navigation, and information services. An overall development trend is to provide high-precision services for real-time applications.

### 5. Stochastic model:

In a GNSS positioning process, observation data is interfered with by factors such as a plurality of error sources and a stochastic error, reducing positioning precision. The observation data is analyzed based on the constructed stochastic model, to learn about error distribution characteristics of the observation data. During data processing, these interference factors are effectively suppressed, to improve positioning precision. Common stochastic models include a Gaussian model, an exponential model, and the like.

### 6. Signal-to-noise ratio (SNR or S/N):

A signal-to-noise ratio is a ratio of signal strength to noise strength in an electronic device or an electronic system. In a GNSS positioning process, the signal-to-noise ratio is one of important indicators for measuring quality of a satellite signal received by a receiver. A relatively high signal-to-noise ratio indicates a relatively high signal strength and a relatively low noise strength. Therefore, the receiver can more easily detect the satellite signal, thereby improving the positioning precision. During data processing performed by the GNSS, the observation data may further be screened based on the signal-to-noise ratio, and used as an independent variable of the stochastic model, thereby improving reliability of a positioning result.

In the related art, intelligent terminals of different models usually select an appropriate model from several preset stochastic models, and a model parameter used by the preset stochastic model cannot completely adapt to positioning chips, antenna layouts, and gain policies of the intelligent terminals of different models. Consequently, when each intelligent terminal performs GNSS positioning based on the configured stochastic model, a standard model defined by an algorithm may not be suitable for an actual application scenario, leading to a loss in positioning precision.

To solve the problem, this application provides a positioning data processing method. For example, the method may include: receiving a plurality of pieces of original observation data uploaded by intelligent terminals, each piece of original observation data including navigation positioning information generated when an intelligent terminal performs positioning and an original signal-to-noise ratio; performing mapping processing on each piece of navigation positioning information to obtain one original index pair, using the original index pair with unique content as a target index pair, and combining a plurality of original index pairs having same content into one target index pair; and performing the following operations on each target index pair: performing anomaly detection on a plurality of original signal-to-noise ratios associated with one target index pair and greater than a first set threshold, to obtain the target signal-to-noise ratios passing the detection, obtaining a signal-to-noise ratio feature of one target index pair based on an occurrence frequency of each target signal-to-noise ratio in a plurality of pieces of original observation data, and performing fitting based on the signal-to-noise ratio feature and a pre-constructed stochastic model to obtain a model parameter of the stochastic model.

In the technical solution provided in this application, a same stochastic model is configured for the intelligent terminals of different models, and then based on the original observation data generated when the intelligent terminals of different models perform positioning, fitting is performed to obtain the model parameter better adapted to a positioning chip, an antenna layout, and a gain policy of the intelligent terminal of the corresponding model. Further, when each intelligent terminal performs GNSS positioning based on the stochastic model configured with the corresponding model parameters, the intelligent terminal is more suitable for the actual application scenario, which is conducive to improving the positioning precision.

Exemplary embodiments of this application are described below in conjunction with the accompanying drawings of the specification. The exemplary embodiments described herein are merely configured for illustrating and explaining this application but are not intended to limit this application. The embodiments in this application and the features in the embodiments may be mutually combined without conflict.

The method provided in the embodiments of this application may be applied to various scenarios such as a cloud technology, artificial intelligence, smart transportation, and assistant driving. The intelligent terminal used in the corresponding scenario is configured with the model parameter satisfying the positioning chip, antenna layout, and gain policy of the intelligent terminal, and then performs the GNSS positioning based on the stochastic model configured with the corresponding model parameter to provide a high-precision positioning service for an application object of the intelligent terminal, to meet positioning requirements.

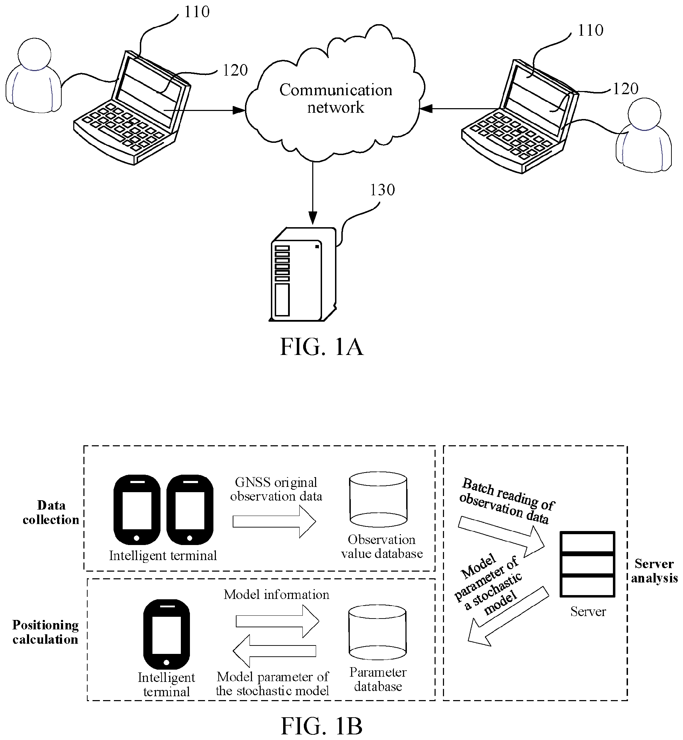

FIG. 1A shows an application scenario. This scenario includes two physical intelligent terminals 110 and one server 130. The intelligent terminals 110 establish a communication connection with the server 130 through a wired network or a wireless network.

The intelligent terminal 110 includes, but is not limited to, a mobile phone, a computer (such as a tablet computer, a notebook computer, or a desktop computer), an intelligent household appliance (such as a smart speaker, and an intelligent refrigerator), an intelligent voice interaction device (such as a smart-watch or smart glasses), an in-vehicle terminal, an aircraft, and the like.

The server 130 in the embodiment of this application may be an independent physical server, or may be a server cluster or a distributed system including a plurality of physical servers, or may be a cloud server that provides basic cloud computing services such as a cloud service, a cloud database, cloud computing, a cloud function, cloud storage, a network service, cloud communication, a middle-ware service, a domain name service, a security service, a content delivery network (CDN), and a big data and artificial intelligence platform. This is not limited herein.

A processor configured to process positioning data is deployed on the server 130, and a server having more powerful calculation power performs the task, and determines the model parameter adapted to the intelligent terminal 110 of the corresponding model.

As shown in FIG. 1B, in a data collection phase, the intelligent terminal 110 may respond to a trigger operation performed by an application object (such as a user of the intelligent terminal 110) on application software having a positioning function (such as a map application or a social application capable of sharing a location), obtain, by using the triggered application software, a plurality of pieces of original observation data generated during previous positioning, and upload each piece of original observation data to an observation value database for storage. When the application software having the positioning function is not triggered by the application object, the intelligent terminal 110 may further automatically collect, by using the application software having the positioning function, a plurality of pieces of original observation data generated when the intelligent terminal performs positioning, and upload the collected data to the observation value database for storage. When the intelligent terminal 110 automatically collects the data, a collection period may further be set for the intelligent terminal, so that the intelligent terminal 110 regularly collects the original observation data generated in the collection period based on the set collection period, to avoid omission of some data, prevent adverse effects on selection of an appropriate model parameter, and further avoid reducing the positioning precision. The observation value database may be set in a built-in storage device of the server 130, or may be set in another device accessible to the server 130.

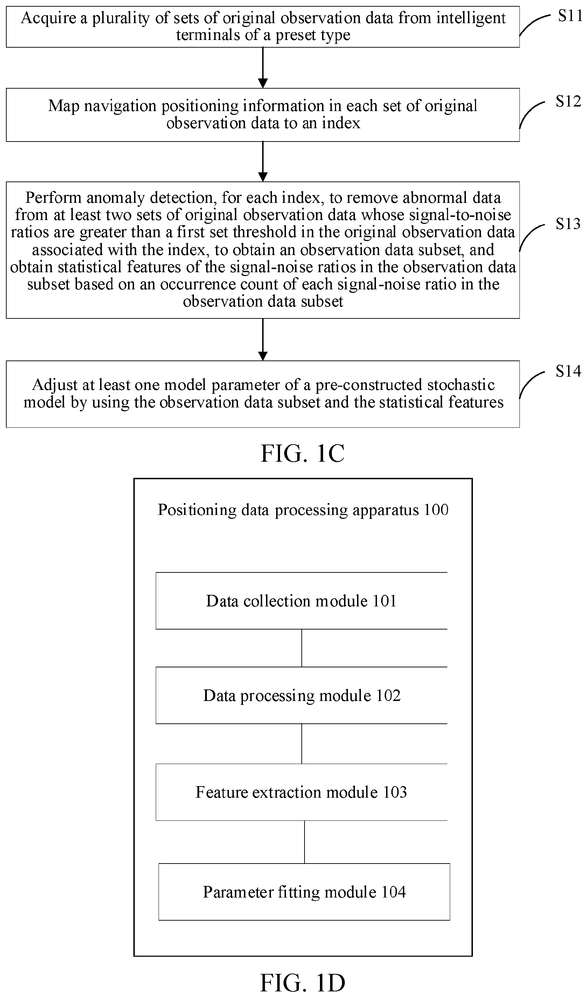

The server 130 invokes a processor to acquire the original observation data from the observation value database for processing. A processing process performed by the server 130 may be as shown in FIG. 1C, and includes the following operations:
S11: Acquire a plurality of sets of original observation data from an intelligent terminal of a preset type.

Each set of original observation data includes navigation positioning information generated when the intelligent terminal performs positioning and a signal-to-noise ratio (the signal-to-noise ratio in the original observation data is further referred to as an original signal-to-noise ratio). The navigation positioning information is information about resources configured for positioning. The resources configured for positioning may include a satellite system for positioning, a carrier frequency of a satellite signal, and the like. The signal-to-noise ratio is a signal-to-noise ratio of a received satellite signal during positioning.

S12: Map the navigation positioning information in each set of original observation data to an index.

The index herein may be an index value, or may be a composite index including at least two indexes, such as an index pair including two indexes. For the composite index, each data element of the navigation positioning information in a set of original observation data may be mapped to one index, and the indexes of at least two data elements are combined to form the composite index for this set of original observation data.

In some embodiments, the index may be a target index pair obtained through merging processing. For example, when the navigation positioning information in each set of original observation data includes two data elements, mapping processing may be performed on the navigation positioning information in each set of original observation data to obtain the respective original index pair, the original index pair with unique content is used as the target index pair, and a plurality of original index pairs having same content are combined into one target index pair.

S13: Perform anomaly detection, for each index, to remove abnormal data from the at least two sets of original observation data whose original signal-to-noise ratios are greater than a first set threshold among the original observation data associated with the index, to obtain an observation data subset, and obtain statistical features of the signal-to-noise ratios in the observation data subsets based on an occurrence count of each signal-to-noise ratio in the observation data subset.

S14: Adjust a pre-constructed stochastic model by using the observation data subset and the statistical features, and determine at least one model parameter of the stochastic model. The at least one model parameter may be provided for configuring the stochastic model for positioning in the intelligent terminal of the preset type.

For example, the server 130 may synchronize the model parameter adapted to the intelligent terminal of the model into a parameter database. In a positioning calculation phase, the intelligent terminal 110 transmits a parameter acquiring request to the parameter database in response to a positioning operation triggered by an application object for application software, and acquires the model parameter adapted to the intelligent terminal of the model from the parameter database. Next, the stochastic model adapted to the corresponding model parameter is employed for positioning calculation. A map of a location of the intelligent terminal is displayed on a positioning interface 120 of the application software, with the current location of the intelligent terminal marked on the map in a form of pins or markers.

In the embodiments, at least two types of intelligent terminals may be preset, and the methods in the embodiments are performed for each type. Various appropriate classification manners may be employed based on an actual requirement. For example, the terminals may be classified based on brands, namely, different types correspond to different terminal brands. For another example, the terminals may be classified based on a model of the terminal, namely, different types correspond to different models. For another example, the terminals may be classified based on parameters (or a combination of parameters) of positioning modules in the intelligent terminals, namely, different types of terminals employ different parameters (or combinations of parameters) of the positioning modules. The parameters of the positioning modules may be selected from, for example, a model or a type of the navigation chip, an antenna layout manner, and a gain policy.

In this way, in the technical solutions of the embodiments, the statistical features of the signal-to-noise ratios during positioning of the terminals of the type are extracted from the original observation data generated when the intelligent terminal of the same type performs positioning, and these statistical features are employed to adjust the preset stochastic model, so that the stochastic model can better adapt to positioning characteristics and an actual observation environment of the terminal of this type, and the model parameter that is better adapted to the intelligent terminal of this type is obtained. When the intelligent terminal of this type performs positioning by using the stochastic model configured with the corresponding model parameter, an obtained positioning result may be more accurate.

In the embodiments, the anomaly detection in operation S13 may include: performing the unimodality test on the signal-to-noise ratios in the at least two sets of original observation data based on at least two signal-to-noise ratio subsets, and performing the normality test on the signal-to-noise ratios in the at least two sets of original observation data based on an initial kurtosis and initial skewness of the signal-to-noise ratios in the at least two sets of original observation data. The at least two signal-to-noise ratio subsets are obtained by dividing the signal-to-noise ratios in the at least two sets of original observation data based on values. When the signal-to-noise ratios in the at least two sets of original observation data pass the unimodality test and the normality test, an outlier test is performed on the signal-to-noise ratios in the at least two sets of original observation data, and the original observation data whose signal-to-noise ratio does not fall within a set outlier range is deleted, to obtain the observation data subset.

In this way, by performing the unimodality test, the normality test, and the outlier test on the original observation data, data reliability of the observation data subset configured for adjusting the stochastic model may be ensured, so that the adjusted stochastic model can generate a more accurate positioning result.

In the embodiments, the foregoing unimodality test may include: clustering the signal-to-noise ratios in the at least two sets of original observation data, to obtain the at least two signal-to-noise ratio subsets; determining a signal-to-noise ratio difference between cluster centers of every two signal-to-noise ratio subsets among the at least two signal-to-noise ratio subsets; determining that the unimodality test fails when at least one signal-to-noise ratio difference is not less than a second set threshold; and determining that the unimodality test succeeds when each signal-to-noise ratio difference is less than the second set threshold.

In the embodiments, the foregoing normality test may include: determining an initial kurtosis and initial skewness of the signal-to-noise ratio in the at least two sets of original observation data, where the initial kurtosis is configured for reflecting sharpness of a normality distribution image of the signal-to-noise ratios, and the initial skewness is configured for reflecting a symmetry degree of the normality distribution image of the signal-to-noise ratios; and normalizing the initial kurtoses and the initial skewness, respectively, to obtain a reference kurtosis and reference skewness; and performing normality test on the reference kurtosis and the reference skewness, to obtain a normality test result for the signal-to-noise ratio in the at least two sets of original observation data.

In the embodiments, when the signal-to-noise ratios in the at least two sets of original observation data fail at least one of the unimodality test and the normality test, the following operations are performed until the first set threshold reaches a preset maximum threshold or the signal-to-noise ratios in the at least two sets of original observation data pass the unimodality test and the normality test: increasing the first set threshold by a set threshold increment; and performing the unimodality test on the signal-to-noise ratios in the at least two sets of original observation data based on the at least two signal-to-noise ratio subsets, and performing the normality test on the signal-to-noise ratios in the at least two sets of original observation data based on the initial kurtoses and the initial skewness of the signal-to-noise ratios in the at least two sets of original observation data.

In the embodiments, a manner of obtaining the statistical features of the signal-to-noise ratios in the observation data subsets in S13 may include: obtaining at least one of a maximum signal-to-noise ratio, an average value, a median, and a standard deviation of the signal-to-noise ratios in the observation data subsets as the statistical feature.

In the embodiments, S14 may include: determining a value of an inter-frequency-point difference parameter of the stochastic model by using the signal-to-noise ratios in the observation data subsets and the statistical features; converting the pre-constructed stochastic model into a weight model whose output value and signal-to-noise ratio are in a linear relationship, the weight model including the at least one model parameter; and performing fitting on the weight model by using the signal-to-noise ratios in the observation data subsets and the statistical features, to obtain an estimated value of the at least one model parameter.

In this way, the pre-constructed stochastic model is converted into a linear weight model, so that a process of adjusting the stochastic model may be simplified, processing resources may be saved, and a processing speed may be increased.

Embodiments of this application further provide a positioning data processing apparatus. As shown in FIG. 1D, the apparatus 100 may include
a data collection module 101, configured to acquire a plurality of sets of original observation data from an intelligent terminal of a preset type, each set of original observation data including navigation positioning information generated when the intelligent terminal performs positioning and a signal-to-noise ratio, and the navigation positioning information being information about a resource for positioning;
a data processing module 102, configured to map the navigation positioning information in each set of original observation data to an index;
a feature extraction module 104, configured to: perform anomaly detection, for each index, to remove abnormal data from at least two sets of original observation data whose signal-to-noise ratios are greater than a first set threshold among the original observation data associated with the index, to obtain an observation data subset, and obtain statistical features of the signal-to-noise ratios in the observation data subset based on an occurrence count of each signal-to-noise ratio in the observation data subset; and
a parameter fitting module 103, configured to adjust a pre-constructed stochastic model by using the observation data subset and the statistical features, and determine at least one model parameter of the stochastic model, the at least one model parameter being provided for configuring the stochastic model for positioning in the intelligent terminal of the preset type.

For specific functions of the foregoing modules, refer to descriptions of corresponding operations of the methods in the embodiments, and details are not described herein again.

Solutions of the embodiments are described below by using specific examples. Details in these examples are merely employed to help understand the foregoing solutions, and implementation of the solutions in the embodiments does not rely on any details in these examples.

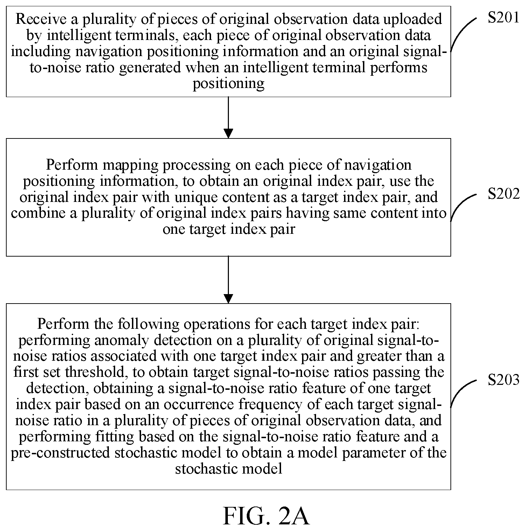

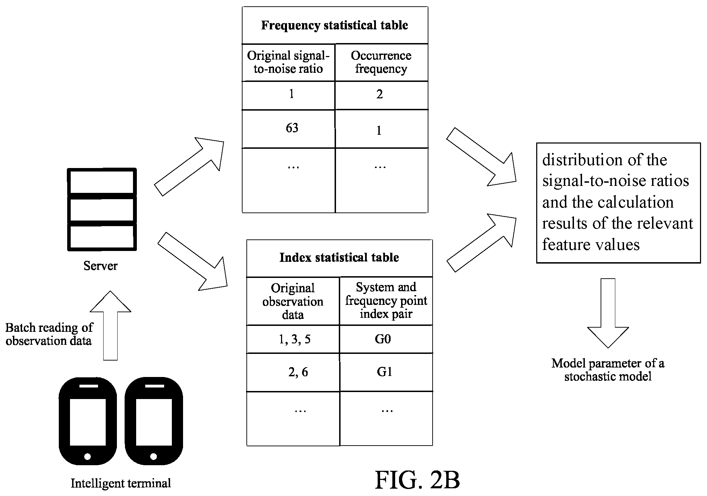

For ease of description, an intelligent terminal is used as an example to describe a process of processing positioning data of the terminal. In the embodiments, sets of positioning data of a plurality of intelligent terminals may be processed in a similar manner. Referring to schematic diagrams shown in FIG. 2A to FIG. 2B, a process of processing the positioning data of an intelligent terminal is as follows:
S201: Receive a plurality of pieces of original observation data uploaded by an intelligent terminal, each piece of original observation data including navigation positioning information generated when the intelligent terminal performs positioning and an original signal-to-noise ratio.

In a data collection phase, the intelligent terminal retrieves a plurality of pieces of original observation data generated during previous positioning by using a map application, and uploads each piece of original observation data to an observation value database for storage. Herein, "retrieve" refers to a process of acquiring the original observation data generated during previous positioning from a positioning module of the intelligent terminal by using the map application. A server then invokes a processor to read a plurality of pieces of original observation data from an observation value database. Reading data collected in a set period is further supported, for example, a plurality of pieces of original observation data collected by the intelligent terminal at a latest time is read, and, for another example, the data collected by the intelligent terminal in the past month is read.

S202: Perform mapping processing on each piece of navigation positioning information, to obtain an original index pair (i.e., a composite index, used as an index of original observation data), use the original index pair with unique content as a target index pair, and combine a plurality of original index pairs having same content into one target index pair.

Due to a vast amount of original observation data obtained through retrieval, it is necessary to perform data cleaning on the collected data to reduce processing load caused by massive data on the server. Data cleaning mainly includes multiple operations such as removing invalid data, extracting valid data, and classifying the data based on a model.

### Operation 1: Remove invalid data.

A plurality of pieces of original observation data are generated when the intelligent terminal performs GNSS positioning, and one piece of original observation data includes one GNSS clock (GNSSClock) field and one GNSS measurement (GNSSMeasurement) field. The GNSSClock field indicates generation time of the observation data, and the GNSSMeasurement field indicates n original observation values generated when the intelligent terminal performs multi-frequency observation on a navigation satellite in an epoch (namely, an observation moment). Each original observation value includes navigation positioning information and a corresponding original signal-to-noise ratio.

The original observation data with incomplete field parameters is considered as invalid data, and the read invalid data is deleted. Only when the original signal-to-noise ratio falls within a set value range, the original signal-to-noise ratio may be considered as an appropriate valid observation value, which is conducive to improving an adaptation degree between the model parameter and the intelligent terminal of the model. Therefore, after the invalid data is deleted, whether the original signal-to-noise ratio falls within the set value range is used as a screening condition, and only GNSS data whose original signal-to-noise ratio is within the set value range in each piece of original observation data is retained. The value range may be set to, for example, greater than 1 dBHz, or 1 to 63 dBHz based on requirements.

### Operation 2: Extract valid data.

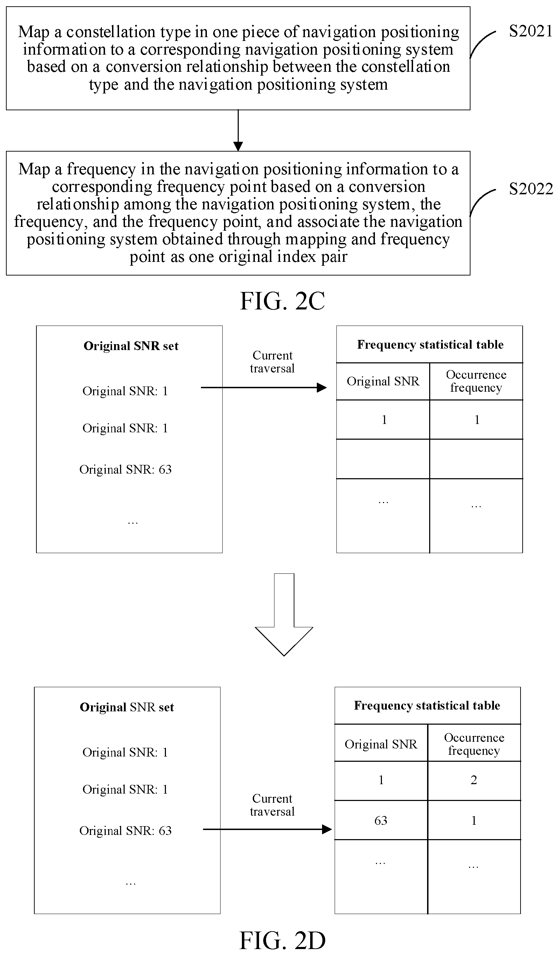

Each piece of navigation positioning information includes a constellation type (ConstellationType) field and a carrier frequency (CarrierFrequency) field. Because field parameters of the two fields are relatively long, and a relationship between the navigation positioning information and a navigation positioning system is not recorded explicitly, the subsequent configuration of model parameters for the intelligent terminals is hindered. Therefore, as shown in FIG. 2C, the following operations are performed on each piece of navigation positioning information, to obtain a corresponding original index pair.

S2021: Map a constellation type in one piece of navigation positioning information to a corresponding navigation positioning system based on a conversion relationship between the constellation type and the navigation positioning system.

A preset identifier may be utilized to indicate each navigation positioning system. In the embodiments, the identifier of the navigation positioning system may include at least one letter, at least one number, at least one symbol, or any combination thereof.

The carrier frequency is a frequency of an electromagnetic wave configured for transmitting information in a wireless communications system. In digital communication, the carrier frequency is usually a constant value, and the carrier frequency may further be understood as an electromagnetic wave having a fixed frequency, and is configured for carrying a modulation signal. A frequency point is a number set for the fixed frequency. Therefore, in radio communication, the frequency point is a mapping relationship with the frequency, and one frequency point corresponds to a particular frequency.

S2022: Map the frequency in the navigation positioning information to the corresponding frequency point based on a conversion relationship among the navigation positioning system, the frequency, and the frequency point, and associate the navigation positioning system obtained through mapping and the frequency point as one original index pair.

When the navigation positioning system used by the intelligent terminal is determined, the frequency in the navigation positioning information is mapped to the corresponding frequency point based on the conversion relationship among the navigation positioning system, the frequency, and the frequency point, and the navigation positioning system obtained through mapping and the frequency point are associated as one original index pair. The original index pair is used as an index of corresponding navigation positioning information.

For example, Table 1 shows a conversion relationship between the constellation type and the navigation positioning system. Table 2 shows the conversion relationship among the navigation positioning system, the frequency, and the frequency point. Based on the conversion relationships listed in Table 1 and Table 2, the navigation positioning information (ConstellationType: 1, CarrierFrequency: 1575420000 Hz) is converted into one original index pair GPS L1. For ease of subsequent statistics collection and drawing, the original index pair GPS L1 may further be converted into an index "G0".

**Table 1**

| Constellation type | Navigation positioning system |
|---|---|
| 1 | GPS: |
| 2 | SBAS |
| 3 | Glonass |
| 4 | QZSS |
| 5 | Beidou |
| 6 | Galileo |
| 7 | IRNSS |
| ... | ... |

**Table 2**

| Navigation positioning system | Carrier frequency | Frequency point |
|---|---|---|
| GPS | 1575420000 Hz | L1 |
| GPS | 1227600000 Hz | L2 |
| ... | ... | ... |

To reduce the storage load and data analysis load on the server, the original signal-to-noise ratios of different navigation satellites and epochs (representing time) may be converted into integers, to obtain updated signal-to-noise ratios (used as the signal-to-noise ratios in subsequent processing), and then all the signal-to-noise ratios are traversed in sequence until the traversal is ended, to obtain a frequency statistical table as shown in Table 3. As shown in FIG. 2D, at each traversal, if a currently traversed signal-to-noise ratio is recorded in the frequency statistical table, an occurrence frequency of the signal-to-noise ratio in the table is updated. If the currently traversed signal-to-noise ratio is not recorded in the frequency statistical table, the currently traversed signal-to-noise ratio is written into the table, and the occurrence frequency of the signal-to-noise ratio in the table is updated. In another embodiment, the rounding operation may not be performed, and the original signal-to-noise ratio may be used directly.

**Table 3**

| Updated signal-to-noise ratio (dBHz) | Occurrence frequency |
|---|---|
| 1 | 2 |
| 2 | 4 |
| ... | ... |
| 63 | 15 |

Operation 3: Perform classification based on a model.

The original index pairs and the frequency statistical tables of the same model are classified into one group based on the model type of the intelligent terminal, to facilitate subsequent data analysis.

S203: Perform the following operations on each target index pair: performing anomaly detection on a plurality of signal-to-noise ratios associated with one target index pair and greater than a first set threshold, to obtain signal-to-noise ratios (further referred to as the target signal-to-noise ratio for ease of description) passing the detection, and obtaining a statistical feature (further abbreviated as a signal-to-noise ratio feature) of the signal-to-noise ratios corresponding to the target index pair based on the occurrence frequency of each target signal-to-noise ratio in a plurality of pieces of original observation data; and performing fitting based on the signal-to-noise ratio features and a pre-constructed stochastic model to obtain a model parameter of the stochastic model.

Due to differences in antenna layouts, gain policies, cut-off signal-to-noise ratios, and severity of environmental conditions during actual observation across different models of the intelligent terminals, the signal-to-noise ratios collected through retrieval may exhibit multimodality and severe skewness. Therefore, the target signal-to-noise ratio with relatively high reliability needs to be first selected.

Firstly, based on the first set threshold T₁, a plurality of signal-to-noise ratios R associated with one target index pair are primarily screened to obtain the signal-to-noise ratio satisfying R > T₁, i.e., a plurality of signal-to-noise ratios greater than the first set threshold. The first set threshold may be determined in a value range of 10 to 20 dBHz based on the model of the intelligent terminal.

Secondly, based on a plurality of signal-to-noise ratio subsets obtained by dividing a plurality of signal-to-noise ratios that are associated with one target index pair and greater than the first set threshold, a unimodality test is performed on a signal-to-noise ratio set including a plurality of signal-to-noise ratios, and a normality test is performed on the signal-to-noise ratio set based on an initial kurtosis and initial skewness of the signal-to-noise ratio set.

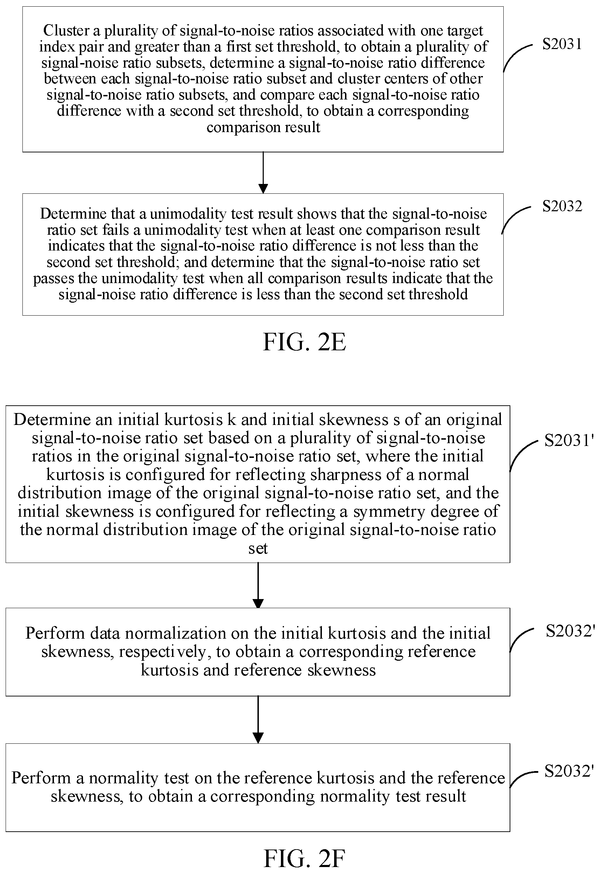

In some embodiments, the anomaly detection mainly includes two parts, one is the unimodality test, and the other is the normality test.
(1) Referring to a schematic flowchart shown in FIG. 2E, a process of unimodality test is as follows:
   S2031: Cluster a plurality of signal-to-noise ratios associated with one target index pair and greater than the first set threshold, to obtain a plurality of signal-to-noise ratio subsets, determine a signal-to-noise ratio difference between each signal-to-noise ratio subset and a cluster center of another signal-to-noise ratio subset except the signal-to-noise ratio subset, and compare each signal-to-noise ratio difference with a second set threshold, to obtain a corresponding comparison result.
   S2032: Determine that a unimodality test result shows the signal-to-noise ratio set fails a unimodality test when at least one comparison result indicates that the signal-to-noise ratio difference is not less than the second set threshold; and determine that the signal-to-noise ratio set passes the unimodality test when all comparison results indicate that the signal-to-noise ratio differences are less than the second set threshold.

In an implementation, a value range of the second set threshold may be 5 to 10 dBHz, to ensure validity of the unimodality test. For example, the plurality of signal-to-noise ratios greater than 10 dBHz are classified into two types by employing a k-means algorithm. After the algorithms converge, whether a signal-to-noise ratio difference between two cluster centers is less than 7 dBHz is checked, and if the signal-to-noise ratio difference is less than 7 dBHZ, the unimodality test result shows that the signal-to-noise ratio set passes the unimodality test; and if the signal-to-noise ratio difference is not less than 7 dHBz, the unimodality test shows that the signal-to-noise ratio set fails the unimodality test.

(2) Referring to a schematic flowchart shown in FIG. 2F, a normality test process is as follows:
S2031': Determine an initial kurtosis and initial skewness of the signal-to-noise ratio set based on a plurality of signal-to-noise ratios in a signal-to-noise ratio set, where the initial kurtosis is configured for reflecting sharpness of a normal distribution image of the signal-to-noise ratio set, and the initial skewness is configured for reflecting the symmetry degree of the normal distribution image of the signal-to-noise ratio set.

Formula 1 is a calculation formula of the initial kurtosis K and the initial skewness S. In the formula, m₂ denotes a second-order sample central moment, m₃ denotes a third-order sample central moment, m₄ denotes a fourth-order sample central moment, h denotes a total quantity of signal-to-noise ratios in the signal-to-noise ratio set, xᵢ denotes an i^{th} signal-to-noise ratio, and x̅ denotes an average value of the signal-to-noise ratio set. $\begin{matrix}K = \frac{{m}_{4}}{{m}_{2}^{2}} - 3 = \frac{\frac{1}{h} {\sum }_{i = 1}^{h} {\left({x}_{i}-\overline{x}\right)}^{4}}{{\left(\frac{1}{h}{\sum }_{i = 1}^{h} {\left({x}_{i}-\overline{x}\right)}^{2}\right)}^{2}} - 3 \\ S = \frac{{m}_{3}}{{{m}_{2}}^{3 / 2}} = \frac{\frac{1}{h} {\sum }_{i = 1}^{h} {\left({x}_{i}-\overline{x}\right)}^{3}}{{\left(\frac{1}{h}{\sum }_{i = 1}^{h} {\left({x}_{i}-\overline{x}\right)}^{2}\right)}^{3 / 2}}\end{matrix}$

The kurtosis is further referred to as a kurtosis coefficient, and is an index representing a peak value of a probability density distribution curve at an average value. Intuitively, the kurtosis reflects the sharpness of the peak, which may be configured for indicating a deviation degree of data, and is usually used as an indicator determining the normality.

The indicator is calculated relative to normal distribution. The kurtosis includes normal distribution (a kurtosis value = 3), a heavy tail (the kurtosis value > 3), and a light tail (the kurtosis value < 3). In statistics, the kurtosis value less than 3 indicates that there are more extreme differences greater than or less than the average value in the data, which is embodied in the image as a data distribution with sharper peaks and lighter tails compared to the normal distribution; and the kurtosis value greater than 3 indicates fewer extreme differences in the data, with a central region of the distribution being relatively more dispersed and data points tending to be distributed at two ends, which is embodied in the image as a flatter data distribution with heavier tails compared to the normal distribution. The kurtosis value equal to 3 indicates that the data distribution is similar to normal distribution and has no particularly prominent peak feature or flat feature.

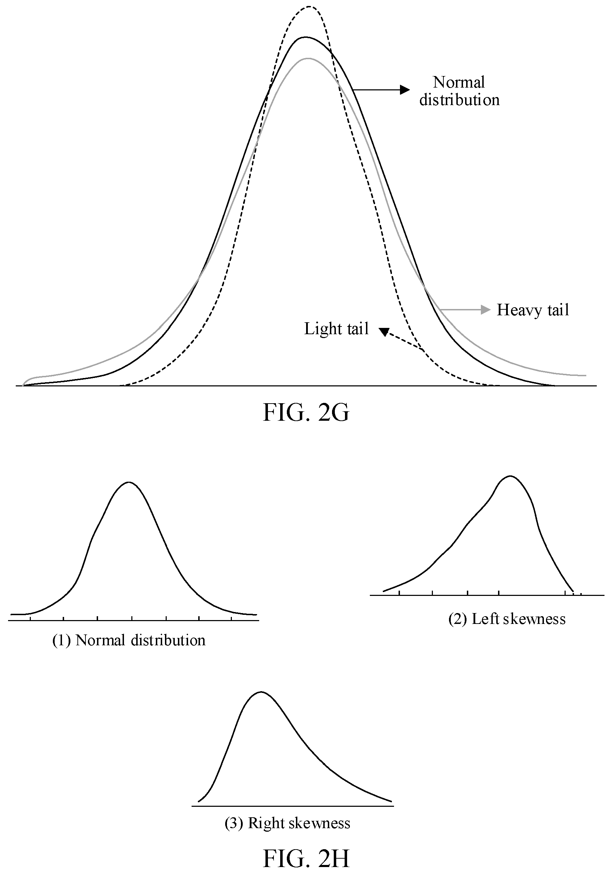

FIG. 2G shows image distribution of different kurtosis values. The black solid line denotes a normal distribution curve with sharp peaks, the black dashed line that is steeper than the normal distribution curve denotes the light tail with a relatively flat peak, and the gray solid line that is smoother than the normal distribution curve denotes the heavy tail.

The skewness is further referred to as a deviation coefficient, which is a measurement of a skew direction and a skew degree of statistical data distribution, and is a numerical feature of an asymmetric degree of statistical data distribution. As shown in FIG. 2H (1), the skewness of the normal distribution is 0, and tail lengths on two sides are symmetrical. As shown in FIG. 2H (2), if the skewness of the distribution is less than 0, the distribution has a negative deviation (i.e., left skewness). In this case, data located on the left of the average value is less than data located on the right of the average value, which is intuitively represented as that the tail on the left is longer than the tail on the right. As shown in FIG. 2H (3), if the skewness of the distribution is greater than 0 (i.e., right skewness). In this case, data located on the left of the average value is greater than data located on the left of the average value, which is intuitively represented as that the tail on the right is longer than the tail on the left. As shown in FIG. 2H (3), if the skewness of the distribution is equal to 0, the distribution is relatively symmetrical, and a normal distribution is presented.

S2032': Perform data normalization on the initial kurtosis and the initial skewness, respectively, to obtain a corresponding reference kurtosis and reference skewness.

Formula 2 is a calculation formula of the reference kurtosis Zₖ and the reference skewness Zₛ, $\begin{matrix}{Z}_{k} = K / σ \left(K\right) \\ {Z}_{s} = S / σ \left(S\right)\end{matrix}$

S2033': Perform a normality test on the reference kurtosis and the reference skewness, to obtain a corresponding normality test result.

In one implementation, a Chi-square test (with a significance level α ranging from 0.05 to 0.2) is employed to test the reference kurtosis Zₖ and reference skewness Zₛ. When both the reference kurtosis and reference skewness pass the test, the signal-to-noise ratio set may be considered to pass the normality test. When the normality test is performed, only excessively severe deviation distribution is excluded. Therefore, the value range of the significance level α may be properly enlarged.

When the signal-to-noise ratio set fails at least one of the unimodality test and the normality test, the following operations are performed until the first set threshold is increased to a maximum threshold specified in the value range or the signal-to-noise ratio set passes the anomaly detection: increasing the first set threshold by a set threshold increment; and then, performing the unimodality test on the signal-to-noise ratio set including a plurality of signal-to-noise ratios based on a plurality of signal-to-noise ratio subsets obtained by dividing a plurality of signal-to-noise ratios associated with one target index pair and greater than the adjusted first set threshold, and performing normality test on the signal-to-noise ratio set based on the initial kurtosis and the initial skewness of the signal-to-noise ratio set.

However, if the signal-to-noise ratio set still fails the anomaly detection after increasing the first set threshold for a plurality of times, the collected original observation data has relatively great randomness, and more data needs to be retrieved for analysis.

When the signal-to-noise ratio set passes the unimodality test and the normality test, an outlier test is further performed on the signal-to-noise ratio set, and the signal-to-noise ratio that is not within a specified outlier range is deleted to obtain the corresponding target signal-to-noise ratio.

Formula 3 is a calculation formula of the outlier test, and a signal-to-noise ratio failing to satisfy the following formula is considered as an outlier. Q₁ is a 25% quantile, Q₃ is a 75% quantile, and an interquartile range I_{QR} is a difference (Q₃ - Q₁) between Q₃ and Q₁. ${Q}_{1} - 3 {I}_{QR} < R < {Q}_{3} + 3 {I}_{QR}$

Based on each target signal-to-noise ratio satisfying formula 3, a signal-to-noise ratio feature of the target signal-to-noise ratio set to which the target signal-to-noise ratio belongs is calculated.

For example, an average signal-to-noise ratio and a median signal-to-noise ratio of the target signal-to-noise ratio set formed by the target signal-to-noise ratios may be determined based on the respective occurrence frequencies of the target signal-to-noise ratios in the plurality of pieces of original observation data.

A total of n pieces of signal-to-noise ratio data in the target signal-to-noise ratio set may be determined based on the occurrence frequency of each target signal-to-noise ratio in the plurality of pieces of original observation data. The target signal-to-noise ratios are sorted in ascending order. When n is an odd number, a (n + 1) / 2^{th} piece of data in the set is the median signal-to-noise ratio Rₘ; and when n is an even number, the n / 2^{th} piece of data in the set is the median signal-to-noise ratio Rₘ.

A total of n pieces of signal-to-noise ratio data in the target signal-to-noise ratio set may be determined based on the respective occurrence frequencies of the target signal-to-noise ratios in the plurality of pieces of original observation data, and a ratio of a sum of the target signal-to-noise ratios to the total quantity of the signal-to-noise ratio data is used as the average signal-to-noise ratio R̅.

A standard deviation signal-to-noise ratio of the target signal-to-noise ratio set may further be determined based on the average signal-to-noise ratio, the target signal-to-noise ratios, and the corresponding occurrence frequencies of the target signal-to-noise ratios.

A total of n pieces of signal-to-noise ratio data in the target signal-to-noise ratio set is determined based on the respective occurrence frequencies of the target signal-to-noise ratios in the plurality of pieces of original observation data. The following operations are then sequentially performed to obtain the standard deviation signal-to-noise ratio Rₛ of the target signal-to-noise ratio set:
Operation 1: Subtract an average signal-to-noise ratio of the target signal-to-noise ratio set from each target signal-to-noise ratio.
Operation 2: Perform a square operation on values obtained in operation 1, and then add resulting squared values;
Operation 3: Divide a result of operation 2 by (n-1); and
Operation 4: Perform a square root operation on values obtained in operation 3, to obtain the standard deviation signal-to-noise ratio Rₛ of the target signal-to-noise ratio set.

A maximum signal-to-noise ratio R_{M}, average signal-to-noise ratio R̅, median signal-to-noise ratio Rₘ, and standard deviation signal-to-noise ratio Rₛ of the target signal-to-noise ratio set are used as the signal-to-noise ratio features of one target index pair associated with the target signal-to-noise ratio set.

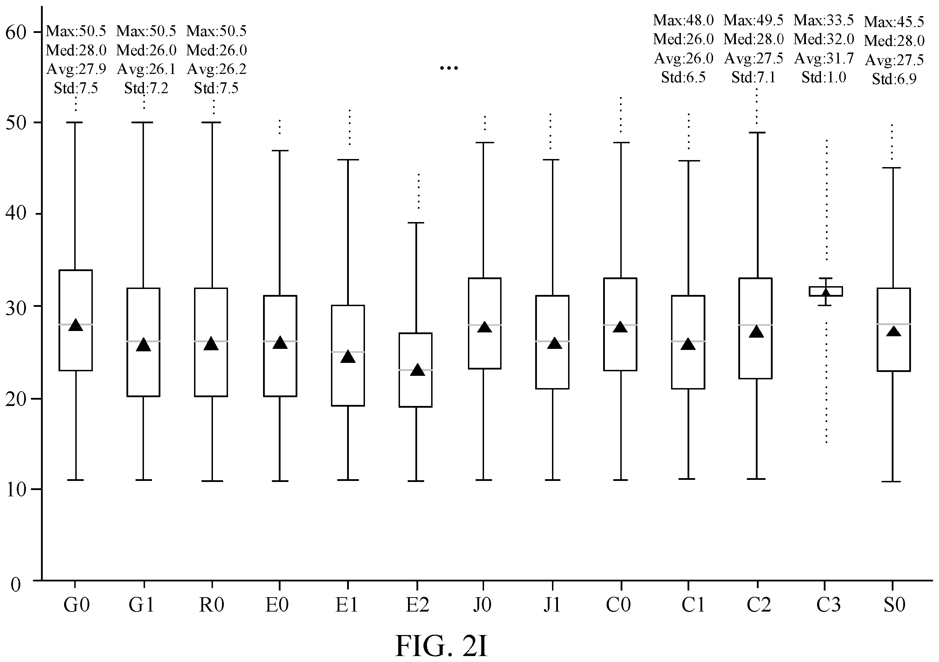

For example, for the target signal-to-noise ratio set associated with the intelligent terminal of the model, a distribution of the signal-to-noise ratios and the calculation results of the relevant feature values are generated, as shown in FIG. 2I. A horizontal axis in the figure denotes a target index pair, a vertical axis denotes a target signal-to-noise ratio, the figure is a box chart, and a rectangular lower edge denotes Q₁, an upper edge denotes Q₃, a triangle denotes the average signal-to-noise ratio, and a gray line segment denotes the median signal-to-noise ratio.

In the technical solution provided in this application, a uniform stochastic model is configured for the intelligent terminals of different models, thereby reducing adaptation difficulty. The technical solution provided in this application may be applied to the stochastic model including the signal-to-noise ratio parameters. In the stochastic model shown in formula 4, σ² denotes observation noise calculated by using the stochastic model, E denotes an elevation angle, a and b denote elevation angle-related parameters, c, d, and g denote adjustable signal-to-noise ratio model parameters. ${σ}^{2} = \left({a}^{2}+\frac{{b}^{2}}{{sin}^{2} E}\right) {10}^{\frac{c - \left(g+R\right)}{d}}$

However, to simplify a configuration procedure of the stochastic model, the same model parameters c and d may be set for a same model. In this way, when a model has a plurality of target signal-to-noise ratios meeting the requirement, a plurality of groups of model parameters c and d do not need to be calculated, and the model parameters c and d are obtained by means of fitting based on only one of the target signal-to-noise ratios and the corresponding signal-to-noise ratio feature.

In the embodiments, a possible model parameter fitting process is as follows:
An inter-frequency-point difference reduction parameter g of the stochastic model is determined based on the signal-to-noise ratio feature and the reference signal-to-noise ratio.

For example, a signal-to-noise ratio parameter difference between a GNSS frequency point and a reference frequency point in one target index pair may be used as the difference reduction parameter g of the stochastic model. To simplify the calculation, the signal-to-noise ratio parameter difference may be a difference between median signal-to-noise ratios or maximum values of frequency points.

Next, based on the inter-frequency-point difference reduction parameter and the elevation angle parameter, the pre-constructed stochastic model is converted into a weight model having a linear relationship.

In the technical solution provided in this application, the uniform stochastic model σ² = g(E)H(R) is configured for the intelligent terminals of different models. For simplicity, during fitting, an elevation angle-related part g(E) is set to a constant, and the foregoing formula is converted into $H \left(R\right) = {10}^{\frac{c - \left(g+R\right)}{d}}$.

A logarithm of $H \left(R\right) = {10}^{\frac{c - \left(g+R\right)}{d}}$ is taken to obtain $f \left(R\right) = {log}_{10} H \left(R\right) = \frac{c - \left(g+R\right)}{d}$. Next, a logarithm of an exponential term log10 is taken, and converted into a linear function $f \left(R\right) = \frac{c - R}{d}$.

Finally, the weight model and the stochastic model are fitted by using a linear least square method or another fitting algorithm, to obtain a signal-to-noise ratio parameter c and a normalized signal-to-noise ratio parameter d of the stochastic model.

Upon completion of the fitting, formula 5 is employed to test the validity of the model parameters c and d. If the test succeeds, the model parameters c, d, and g of the intelligent terminal of the corresponding model are used and synchronized to the parameter database. In a positioning calculation phase, the intelligent terminal transmits a parameter acquiring request to the parameter database in response to a positioning operation triggered by an application object for application software, and acquires the model parameter adapted to the intelligent terminal of the model from the parameter database. Next, the stochastic model adapted to the corresponding model parameter is employed for positioning calculation. A map of a location of the intelligent terminal is displayed on a positioning interface of the application software. $\begin{matrix}min \left(\overline{R}, {R}_{m}\right) - {R}_{s} \leq c \leq {R}_{m} \\ {R}_{s} \leq d \leq 3 {R}_{s}\end{matrix}$

The model parameter determining method provided in the embodiments of this application may be applied to the stochastic model including the signal-to-noise ratio parameter, and then based on the original observation data generated when the intelligent terminals of different models perform positioning, fitting is performed to obtain the model parameters better adapted to a positioning chip, an antenna layout, and a gain policy of the intelligent terminal of the corresponding model. Further, when each intelligent terminal performs GNSS positioning based on the stochastic model configured with the corresponding model parameters, the intelligent terminal is more suitable for the actual application scenario, which is conducive to improving the positioning precision.

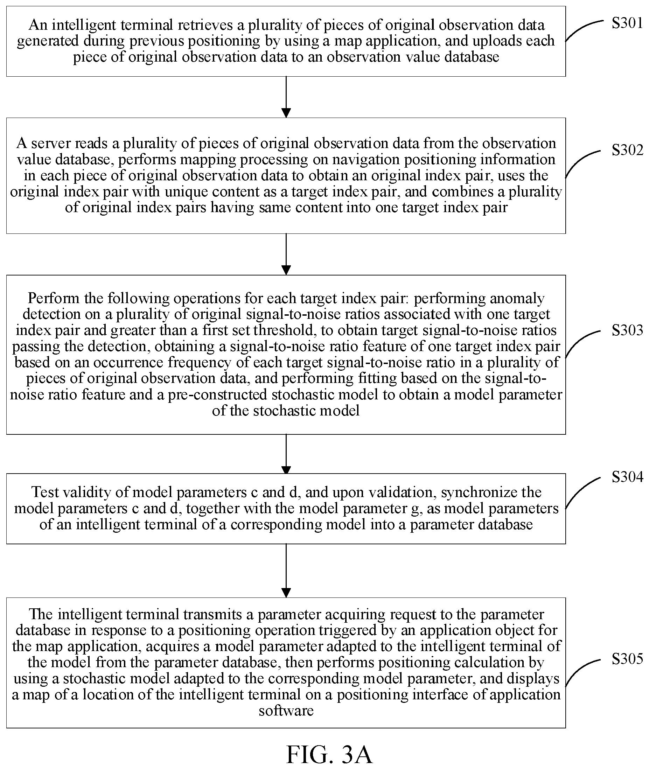

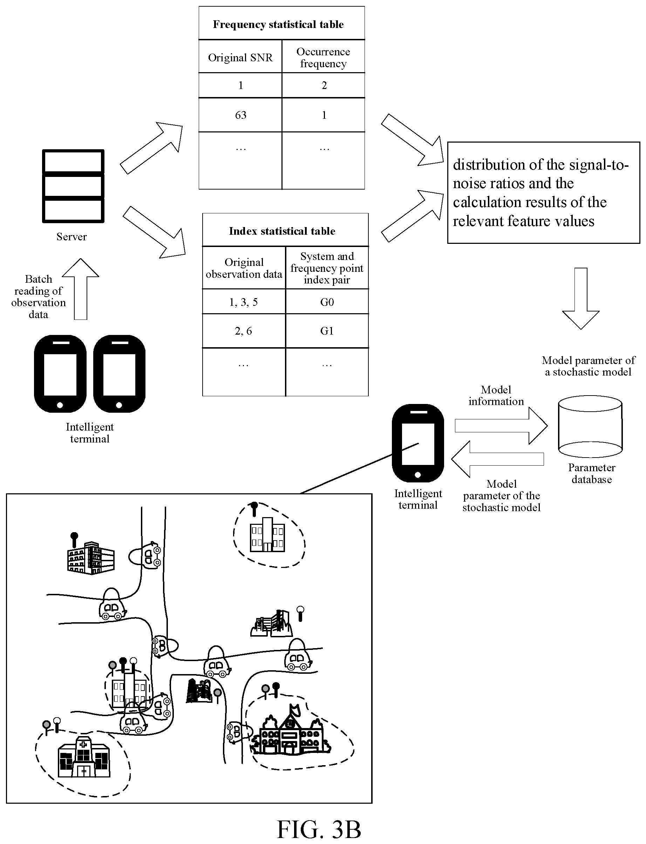

As shown in FIG. 3A to FIG. 3B, the method provided in the embodiments of this application is applied to a map application, and a process of processing and applying positioning data is as follows:
S301: An intelligent terminal retrieves a plurality of pieces of original observation data generated during previous positioning by using a map application, and uploads each piece of original observation data to an observation value database.
S302: A server reads a plurality of pieces of original observation data from the observation value database, performs mapping processing on navigation positioning information in each piece of original observation data to obtain an original index pair, uses the original index pair with unique content as a target index pair, and combines a plurality of original index pairs having same content into one target index pair.
S303: Perform the following operations on each target index pair: performing anomaly detection on a plurality of signal-to-noise ratios associated with one target index pair and greater than a first set threshold, to obtain the target signal-to-noise ratios passing the detection, obtaining a signal-to-noise ratio feature of one target index pair based on an occurrence frequency of each target signal-to-noise ratio in the plurality of pieces of original observation data, and performing fitting based on the signal-to-noise ratio feature and a pre-constructed stochastic model to obtain a model parameter of the stochastic model.
S304: Test validity of model parameters c and d, and upon validation, synchronize the model parameters c and d, together with the model parameter g, as the model parameters of an intelligent terminal of a corresponding model into a parameter database.
S305: The intelligent terminal transmits a parameter acquiring request to the parameter database in response to a positioning operation triggered by an application object for the map application, acquires a model parameter adapted to the intelligent terminal of the model from the parameter database, then performs positioning calculation by using a stochastic model adapted to the corresponding model parameter, and displays a map of a location of the intelligent terminal on a positioning interface of application software.

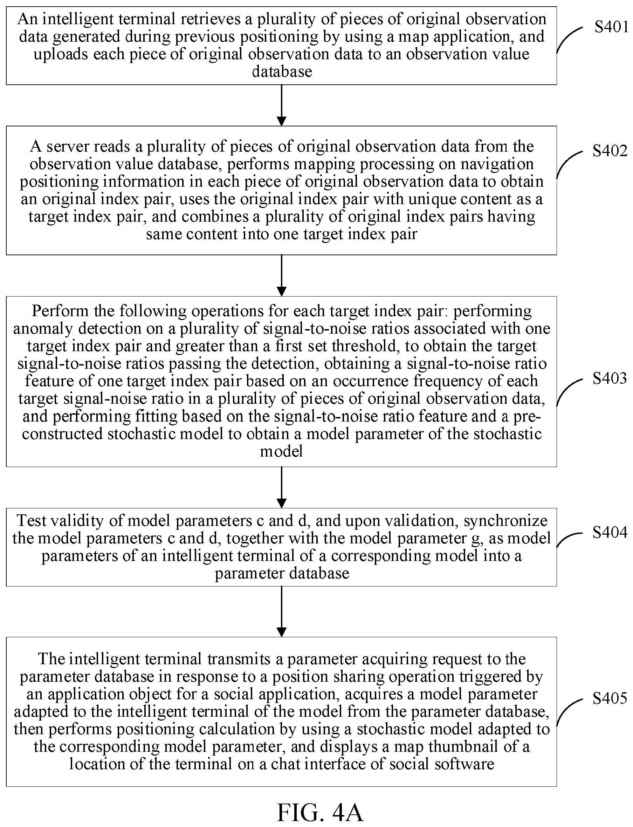

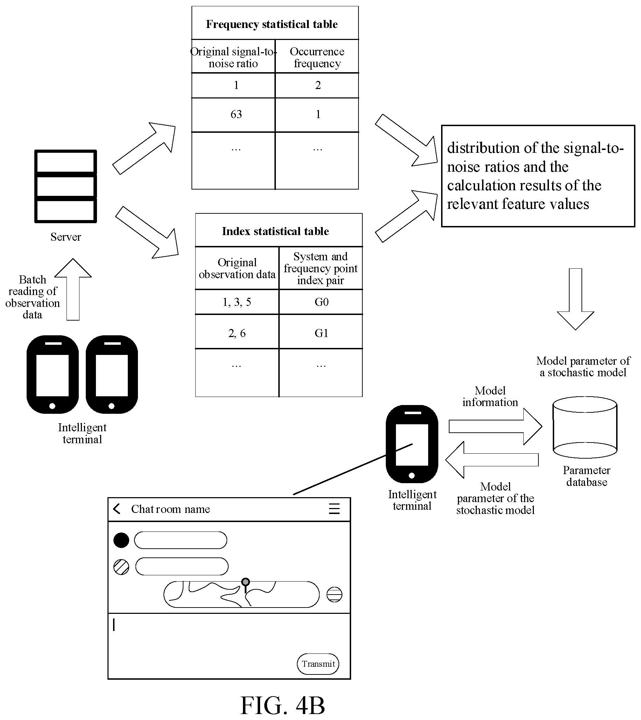

As shown in FIG. 4A to FIG. 4B, the method provided in the embodiments of this application is applied to a social application having a positioning function, and a process of positioning and applying positioning data is as follows.

S401: An intelligent terminal retrieves a plurality of pieces of original observation data generated during previous positioning by using a map application, and uploads each piece of original observation data to an observation value database.

S402: A server reads a plurality of pieces of original observation data from the observation value database, performs mapping processing on navigation positioning information in each piece of original observation data to obtain an original index pair, uses the original index pair with unique content as a target index pair, and combines a plurality of original index pairs having same content into one target index pair.

S403: Perform the following operations on each target index pair: performing anomaly detection on a plurality of signal-to-noise ratios associated with one target index pair and greater than a first set threshold, to obtain the target signal-to-noise ratios passing the detection, obtaining a signal-to-noise ratio feature of one target index pair based on an occurrence frequency of each target signal-to-noise ratio in the plurality of pieces of original observation data, and performing fitting based on the signal-to-noise ratio feature and a pre-constructed stochastic model to obtain a model parameter of the stochastic model.

S404: Test validity of model parameters c and d, and upon validation, synchronize the model parameters c and d, together with the model parameter g, as the model parameters of an intelligent terminal of a corresponding model into a parameter database.

S405: The intelligent terminal transmits a parameter acquiring request to the parameter database in response to a position sharing operation triggered by an application object for the social application, acquires a model parameter adapted to the intelligent terminal of the model from the parameter database, then performs positioning calculation by using a stochastic model adapted to the corresponding model parameter, and displays a map thumbnail of a location of the terminal on a chat interface of social software.

In addition, in the specific implementation of this application, relevant object data such as the original observation data generated when the intelligent terminal performs positioning is involved. When the above embodiments of this application are applied to a specific product or technology, a permission or consent of an object is required, and collection, use, and processing of the relevant data need to comply with relevant laws, regulations, and standards of relevant countries and regions.

In the embodiments of this application, terms such as "module" or "unit" refer to a computer program having a preset function or a part of a computer program, and works together with other relevant parts to achieve a preset objective, and may be all or partially implemented by using software, hardware (such as a processing circuit or a memory), or a combination thereof. Similarly, one processor (or a plurality of processors or memories) may be configured to implement one or more modules or units. In addition, each module or unit may be a part of an integrated module or unit including a function of the module or unit.

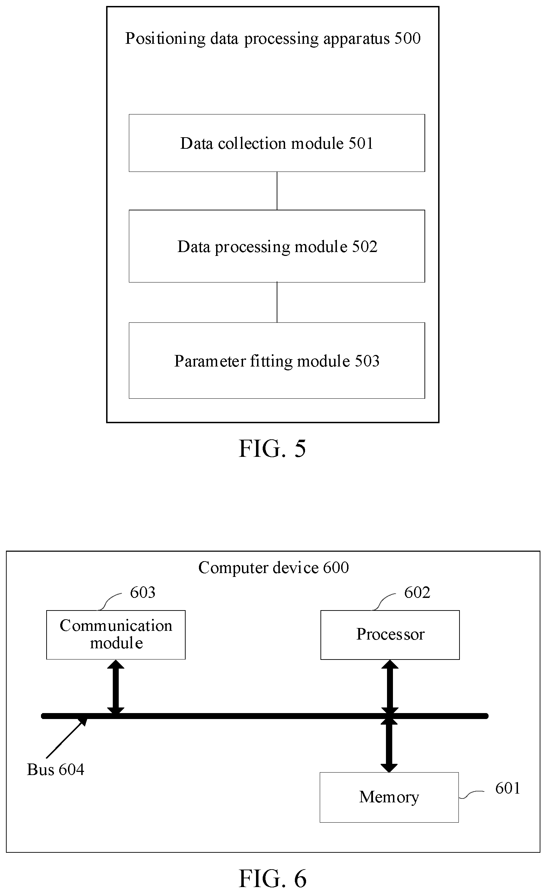

Based on the same inventive concept as the foregoing method embodiments, the embodiments of this application further provide a positioning data processing apparatus. As shown in FIG. 5, a positioning data processing apparatus 500 may include:
a data collection module 501, configured to receive a plurality of pieces of original observation data uploaded by an intelligent terminal, each piece of original observation data including navigation positioning information generated when the intelligent terminal performs positioning and a signal-to-noise ratio;
a data processing module 502, configured to perform mapping processing on each piece of navigation positioning information, to obtain an original index pair corresponding to each piece of navigation positioning information, use the original index pair with unique content as a target index pair, and combine a plurality of original index pairs having same content into one target index pair;
a parameter fitting module 503, configured to perform the following operations on each target index pair:
performing anomaly detection on a plurality of signal-to-noise ratios associated with one target index pair and greater than a first set threshold, to obtain target signal-to-noise ratios passing the detection, and obtaining a signal-to-noise ratio feature of one target index pair based on an occurrence frequency of each target signal-to-noise ratio in the plurality of pieces of original observation data; and
performing fitting based on the signal-to-noise ratio feature and a pre-constructed stochastic model to obtain model parameters of the stochastic model.

In the embodiment of FIG. 5, the parameter fitting module 503 may be considered as a module obtained by combining the feature extraction module 104 and the parameter fitting module 103 in the embodiment of FIG. 1D.

In the embodiments, the parameter fitting module 503 is configured to:
perform a unimodality test on a signal-to-noise ratio set including a plurality of signal-to-noise ratios based on a plurality of signal-to-noise ratio subsets obtained by dividing the plurality of signal-to-noise ratios that are associated with one target index pair and greater than the first set threshold, and perform a normality test on the signal-to-noise ratio set based on an initial kurtosis and initial skewness of the signal-to-noise ratio set; and
further perform an outlier test on the signal-to-noise ratio set when the signal-to-noise ratio set passes the unimodality test and the normality test, and delete the signal-to-noise ratio that is not within a set outlier range to obtain the corresponding target signal-to-noise ratio.

In the embodiments, the parameter fitting module 503 is configured to:
cluster a plurality of signal-to-noise ratios associated with one target index pair and greater than a first set threshold, to obtain a plurality of signal-to-noise ratio subsets;
determine a signal-to-noise ratio difference between each signal-to-noise ratio subset and cluster centers of other signal-to-noise ratio subsets, and compare each signal-to-noise ratio difference with a second set threshold to obtain a corresponding comparison result; and
determine that a unimodality test result shows the signal-to-noise ratio set fails the unimodality test when at least one comparison result indicates that the signal-to-noise ratio difference is not less than the second set threshold; and determine that the signal-to-noise ratio set passes the unimodality test when all comparison results indicate that the signal-to-noise ratio differences are less than the second set threshold.

In the embodiments, the parameter fitting module 503 is configured to:
determine an initial kurtosis and initial skewness of the signal-to-noise ratio set based on the plurality of signal-to-noise ratios in the signal-to-noise ratio set, where the initial kurtosis is configured for reflecting sharpness of a normal distribution image of the signal-to-noise ratio set, and the initial skewness is configured for reflecting a symmetry degree of the normal distribution image of the signal-to-noise ratio set;
perform data normalization on the initial kurtosis and the initial skewness, respectively, to obtain a corresponding reference kurtosis and reference skewness; and
perform a normality test on the reference kurtosis and the reference skewness, to obtain a corresponding normality test result.

In the embodiments, the parameter fitting module 503 is configured to:
determine an average signal-to-noise ratio and a median signal-to-noise ratio of the target signal-to-noise ratio set formed by the target signal-to-noise ratios based on occurrence frequencies of the target signal-to-noise ratios in the plurality of pieces of original observation data; and
determine a standard deviation signal-to-noise ratio of the target signal-to-noise ratio set based on the average signal-to-noise ratio, the target signal-to-noise ratios, and the corresponding occurrence frequencies of the target signal-to-noise ratios; and
use a maximum signal-to-noise ratio, the average signal-to-noise ratio, the median signal-to-noise ratio, and the standard deviation signal-to-noise ratio of the target signal-to-noise ratio set as signal-to-noise ratio features of the target index pair associated with the target signal-to-noise ratio set.

In the embodiments, the data processing module 502 is configured to:
perform the following operations on each piece of navigation positioning information:
mapping a constellation type in one piece of navigation positioning information to a corresponding navigation positioning system based on a conversion relationship between the constellation type and the navigation positioning system;
mapping a frequency in a piece of navigation positioning information to a corresponding frequency point based on a conversion relationship among the navigation positioning system, the frequency, and the frequency point; and
associating the navigation positioning system obtained through mapping and the frequency point as one original index pair.

In the embodiments, the parameter fitting module 503 is configured to:
determine an inter-frequency-point difference reduction parameter of a stochastic model based on the signal-to-noise ratio feature and a reference signal-to-noise ratio; and
convert a pre-constructed stochastic model into a weight model having a linear relationship based on the inter-frequency-point difference reduction parameter and an elevation angle parameter; and
perform fitting on the weight model and the stochastic model by using a fitting algorithm, to obtain a signal-to-noise ratio parameter of the stochastic model and a normalized signal-to-noise ratio parameter.

In the embodiments, when the signal-to-noise ratio set fails the at least one of the unimodality test and the normality test, the parameter fitting module 503 performs the following operations, until a first set threshold increases to the maximum threshold specified in a value range or the signal-to-noise ratio set passes the anomaly detection:
increasing the first set threshold by a set threshold increment; and
performing a unimodality test on the signal-to-noise ratio set including a plurality of signal-to-noise ratios based on a plurality of signal-to-noise ratio subsets obtained by dividing the plurality of signal-to-noise ratios associated with one target index pair and greater than the adjusted first set threshold, and performing a normality test on the signal-to-noise ratio set based on an initial kurtosis and initial skewness of the signal-to-noise ratio set.

For ease of description, the above components are respectively described as they are divided into modules (or units) according to functions. Certainly, during implementation of this application, functions of the modules (or units) may be implemented in one or more pieces of software or hardware.

After the positioning data processing method and apparatus according to exemplary implementations of this application are described, next, a computer device according to another exemplary implementation of this application is described.

A person skilled in the art can understand that various aspects of this application may be implemented as a system, a method, or a program product. Therefore, each aspect of this application may be specifically implemented in the following forms: a complete hardware implementation, a complete software implementation (including firmware, microcode, and the like), or an implementation combining hardware and software aspects, which may be collectively referred to as a "circuit", a "module", or a "system" herein.

Based on the same inventive concept of the above method embodiment, an embodiment of this application further provides a computer device. In an embodiment, the computer device may be a server, such as a server 130 shown in FIG. 1A. In the embodiment, the structure of the computer device 600 is shown in FIG. 6 and may at least include a memory 601, a communication module 603, and at least one processor 602.

The memory 601 is configured to store a computer program executed by the processor 602. The memory 601 may mainly include a program storage area and a data storage area. The program storage area may store an operating system, a program required for running an instant communication function, and the like. The data storage area may store various instant communication information, operation instruction sets, and the like.

The memory 601 may be a volatile memory such as a random-access memory (RAM); the memory 601 may further be a non-volatile memory such as a read-only memory, a flash memory, a hard disk drive (HDD), or a solid-state drive (SSD); or the memory 601 may be any other medium capable of carrying or storing a desired computer program in a form of instructions or data structures and capable of being accessed by a computer, but is not limited thereto. The memory 601 may be a combination of the foregoing memories.

The processor 602 may include one or more central processing units (CPUs), or is a digital processing unit, or the like. The processor 602 is configured to implement the foregoing positioning data processing method when invoking the computer program stored in the memory 601.

The communication module 603 is configured to communicate with a terminal device and other servers.

A specific connection medium between the memory 601, the communication module 603, and the processor 602 is not limited in the present embodiment of this application. In the embodiments of this application, as shown in FIG. 6, the memory 601 is connected to the processor 602 via a bus 604, and the bus 604 is indicated by a bold line in FIG. 6. The connection modes between other components are merely illustrative and are not intended for limitations. The bus 604 may be classified as an address bus, a data bus, a control bus, and the like. For ease of description, the bus in FIG. 6 is described by using only one bold line. However, this does not describe that there is only one bus or one type of bus.

The memory 601 has a computer storage medium stored therein, the computer storage medium has computer-executable instructions stored therein, and the computer-executable instructions are configured for implementing the positioning data processing method in the embodiments of this application. The processor 602 is configured to perform the positioning data processing method, as shown in FIG. 2A.

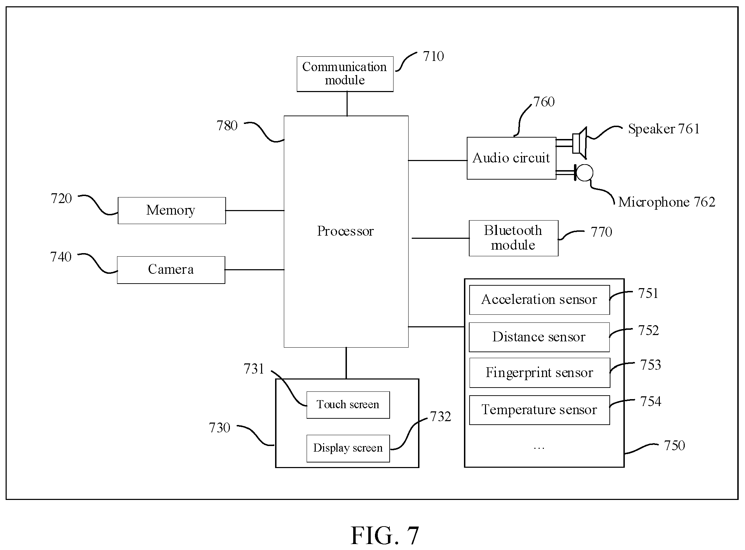

In another embodiment, the computer device may further be another computer device, such as the terminal device 110 shown in FIG. 1A. In this embodiment, a structure of the computer device may be shown in FIG. 7, including components such as a communication component 710, a memory 720, a display unit 730, a camera 740, a sensor 750, an audio circuit 760, a Bluetooth module 770, and a processor 780.

The memory 720 may be configured to store a software program and data. The processor 780 executes various functions of the terminal device 110 and data processing by running software programs or data stored in the memory 720. The memory 720 may include a high speed random access memory, and may alternatively include a non-volatile memory, such as at least one magnetic disk storage device, a flash memory, or another volatile solid-state storage device. The memory 720 stores an operating system that enables the terminal device 110 to run. In this application, the memory 720 may store an operating system and various application programs and may further store a computer program for implementing the positioning data processing method in the embodiments of this application.

The display unit 730 may include a display screen 732 configured on a front surface of the terminal device 110. The display unit 730 may further include a touch screen 731 configured on the front surface of the terminal device 110.

The terminal device may further include at least one sensor 750, such as an acceleration sensor 751, a distance sensor 752, a fingerprint sensor 753, and a temperature sensor 754.

The audio circuit 760, a speaker 761, and a microphone 762 may provide audio interfaces between a user and the terminal device 110.

The processor 780 is a control center of the terminal device and is connected to various parts of the entire terminal by using various interfaces and lines. By running or executing the software program stored in the memory 720 and invoking data stored in the memory 720, the processor executes various functions of the terminal device and processes data. In some embodiments, the processor 780 may include one or more processing units. The processor 780 may further integrate an application processor and a base-band processor.

In some possible implementations, various aspects of the positioning data processing method provided in this application may further be implemented in a form of a program product. The program product includes a computer program. When the program product is run on a computer device, the computer program is configured for causing the computer device to perform the operations in the positioning data processing method according to various exemplary implementations of this application described above in the specification. For example, the computer device may perform the operations shown in FIG. 2A.

The program product may use any combination of one or more readable media. The readable medium may be a readable signal medium or a readable storage medium. The readable storage medium may be, for example, but is not limited to, an electric, magnetic, optical, electromagnetic, infrared, or semi-conductor system, apparatus, or device, or any combination thereof. More specific examples (a non-exhaustive list) of the readable storage medium include an electrical connection having one or more wires, a portable disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any appropriate combination thereof.

Although a plurality of units or sub-units of the apparatus have been mentioned in the detailed description above, such division is merely exemplary and not mandatory. Actually, according to the implementations of this application, features and functions of two or more units described above may be specifically implemented in one unit. On the contrary, the features and functions of one unit described above may be further divided to be implemented by a plurality of units.

In addition, although the operations of the method in this application are described in a specific order in the accompanying drawings, this does not require or imply that these operations need to be performed in the specific order, or all operations shown need to be performed to achieve the expected result. Additionally or alternatively, some operations may be omitted, a plurality of operations may be combined into one operation for execution, and/or one operation may be decomposed into a plurality of operations for execution.

A person skilled in the art can understand that the embodiments of this application may be provided as a method, a system, or a computer program product. Therefore, this application may use a form of hardware-only embodiments, software-only embodiments, or embodiments combining software and hardware. Moreover, this application may use a form of a computer program product that is implemented on one or more computer-usable storage media (including but not limited to a disk memory, a CD-ROM, and an optical memory) that include a computer-usable computer program.

This application is described with reference to flowcharts and/or block diagrams of the method, the device (system), and the computer program product according to the embodiments of this application. Computer program commands can implement each procedure and/or block in the flowcharts and/or block diagrams and a combination of procedures and/or blocks in the flowcharts and/or block diagrams. These computer program commands may be provided to a general-purpose computer, a special-purpose computer, an embedded processor, or a processor of another programmable data processing device to generate a machine, so that an apparatus configured to implement functions specified in one or more procedures in the flowcharts and/or one or more blocks in the block diagrams is generated by using commands executed by the computer or the processor of another programmable data processing device.

These computer program commands may further be stored in a computer-readable memory that can guide a computer or another programmable data processing device to operate in a specific manner, so that the commands stored in the computer-readable memory generate an artifact that includes a command apparatus, and the command apparatus implements a specific function in one or more procedures in the flowcharts and/or in one or more blocks in the block diagrams.

These computer program commands may further be loaded onto a computer or another programmable data processing device, so that a series of operations and steps are performed on the computer or the another programmable device, thereby generating computer-implemented processing. Therefore, the commands executed on the computer or the another programmable device provide steps for implementing a specific function in one or more processes in the flowcharts and/or in one or more blocks in the block diagrams.

Technical features of the foregoing embodiments may be combined in different manners. To make description concise, not all possible combinations of the technical features in the foregoing embodiments are described. However, the combinations of these technical features shall be considered as falling within the scope recorded by this specification provided that no conflict exists.

Although exemplary embodiments of this application are described, those skilled in the art may make other changes and modifications once they become aware of the basic creative concept herein. Therefore, the appended claims are intended to be interpreted as including the embodiments and all changes and modifications falling within the scope of this application.

A person skilled in the art can make various modifications and variations to this application without departing from the spirit and scope of this application. In this case, if the modifications and variations made to this application fall within the scope of the claims of this application and their equivalent technologies, this application is intended to include these modifications and variations.

## Claims

1. A positioning data processing method performed by a computer device, the method comprising:
acquiring a plurality of sets of original observation data from a plurality of intelligent terminals of a preset type, each set of original observation data comprising navigation positioning information generated when an intelligent terminal performs positioning and a signal-to-noise ratio, and the navigation positioning information being information about resources used for positioning;
mapping the navigation positioning information in each set of original observation data to a respective index;
performing anomaly detection, for each index, to remove abnormal data from at least two sets of original observation data in the original observation data associated with the index, to obtain an observation data subset;
obtaining statistical features of the signal-to-noise ratios in the observation data subset based on an occurrence count of each signal-to-noise ratio in the observation data subset; and
adjusting at least one model parameter of a pre-constructed stochastic model by using the observation data subset and the statistical features, the at least one model parameter being used for configuring a stochastic model for positioning in an intelligent terminal of the preset type.

2. The method according to claim 1, wherein the performing anomaly detection to remove abnormal data from at least two sets of original observation data among the original observation data associated with the index, to obtain an observation data subset comprises:
performing a unimodality test on the signal-to-noise ratios in the at least two sets of original observation data based on at least two signal-to-noise ratio subsets, and performing a normality test on the signal-to-noise ratios in the at least two sets of original observation data based on an initial kurtosis and initial skewness of the signal-to-noise ratios in the at least two sets of original observation data, the at least two signal-to-noise ratio subsets being obtained by grouping the signal-to-noise ratios in the at least two sets of original observation data based on values; and
performing an outlier test on the signal-to-noise ratios in the at least two sets of original observation data when the signal-to-noise ratios in the at least two sets of original observation data pass the unimodality test and the normality test, and deleting the original observation data whose signal-to-noise ratio does not fall within a set outlier range, to obtain the observation data subset.

3. The method according to claim 2, wherein the performing a unimodality test on the signal-to-noise ratios in the at least two sets of original observation data comprises:
clustering the signal-to-noise ratios in the at least two sets of original observation data, to obtain the at least two signal-to-noise ratio subsets;
determining a signal-to-noise ratio difference between cluster centers of every two signal-to-noise ratio subsets among the at least two signal-to-noise ratio subsets; and
determining that the signal-to-noise ratio fails the unimodality test when at least one signal-to-noise ratio difference is not less than a second set threshold; and determining that the signal-to-noise ratio passes the unimodality test when each signal-to-noise ratio difference is less than the second set threshold.

4. The method according to claim 2, wherein the performing a normality test on the signal-to-noise ratios in the at least two sets of original observation data comprises:
determining an initial kurtosis and initial skewness of the signal-to-noise ratio in the at least two sets of original observation data, the initial kurtosis being configured for reflecting sharpness of a normal distribution image of the signal-to-noise ratio, and the initial skewness being configured for reflecting a symmetry degree of the normal distribution image of the signal-to-noise ratio;
normalizing the initial kurtosis and the initial skewness, respectively, to obtain a reference kurtosis and reference skewness; and
performing a normality test on the reference kurtosis and the reference skewness, to obtain a normality test result of the signal-to-noise ratios in the at least two sets of original observation data.

5. The method according to claim 1, wherein the obtaining statistical features of the signal-to-noise ratios in the observation data subset based on an occurrence count of each signal-to-noise ratio in the observation data subset comprises:
obtaining at least one of a maximum signal-to-noise ratio, an average value, a median, and a standard deviation of signal-to-noise ratios in the observation data subset as the statistical feature.

6. The method according to any one of claims 1 to 5, wherein the mapping the navigation positioning information in each set of original observation data to an index comprises:
mapping a constellation type in the navigation positioning information to a corresponding navigation positioning system based on a conversion relationship between the constellation type and the navigation positioning system;
mapping a frequency in the navigation positioning information to a corresponding frequency point based on a conversion relationship among the navigation positioning system, the frequency, and the frequency point; and
using an index pair obtained by associating the navigation positioning system obtained through mapping and the frequency point as the index.

7. The method according to any one of claims 1 to 5, wherein the adjusting a pre-constructed stochastic model by using the observation data subset and the statistical feature, and determining a value of at least one model parameter of the stochastic model comprises:
determining a value of an inter-frequency-point difference parameter of the stochastic model by using the signal-to-noise ratios in the observation data subset and the statistical feature;
converting the pre-constructed stochastic model into a weight model whose output value and signal-to-noise ratio are in a linear relationship, the weight model comprising the at least one model parameter; and
performing fitting on the weight model by using the signal-to-noise ratios in the observation data subset and the statistical feature, to obtain the value of the at least one model parameter.

8. The method according to claim 2, wherein the anomaly detection for each index is applied to at least two sets of original observation data whose signal-noise ratios are greater than a first set threshold in the original observation data associated with the index; when the signal-to-noise ratios in the at least two sets of original observation data fail at least one of the unimodality test and the normality test, the following operations are performed until the first set threshold reaches a preset maximum threshold or the signal-to-noise ratios in the at least two sets of original observation data pass the unimodality test and the normality test:
increasing the first set threshold by a set threshold increment; and
performing the unimodality test on the signal-to-noise ratios in the at least two sets of original observation data based on at least two signal-to-noise ratio subsets, and performing the normality test on the signal-to-noise ratios in the at least two sets of original observation data based on the initial kurtosis and initial skewness of the signal-to-noise ratios in the at least two sets of original observation data.

9. A positioning data processing apparatus, comprising:
a data collection module, configured to acquire a plurality of sets of original observation data from an intelligent terminal of a preset type, each set of original observation data comprising navigation positioning information generated when the intelligent terminal performs positioning and a signal-to-noise ratio, and the navigation positioning information being information about a resource for positioning;
a data processing module, configured to map the navigation positioning information in each set of original observation data to an index;
a feature extraction module, configured to: perform anomaly detection, for each index, to remove abnormal data from at least two sets of original observation data in the original observation data associated with the index, to obtain an observation data subset, and obtain statistical features of the signal-to-noise ratios in the observation data subset based on an occurrence count of each signal-to-noise ratio in the observation data subset; and
a parameter fitting module, configured to adjust at least one model parameter of a pre-constructed stochastic model by using the observation data subset and the statistical features, the at least one model parameter being used for configuring a stochastic model for positioning in an intelligent terminal of the preset type.

10. The apparatus according to claim 9, wherein the feature extraction module is configured to:
perform a unimodality test on the signal-to-noise ratios in the at least two sets of original observation data based on at least two signal-to-noise ratio subsets, and perform a normality test on the signal-to-noise ratios in the at least two sets of original observation data based on an initial kurtosis and initial skewness of the signal-to-noise ratios in the at least two sets of original observation data, the at least two signal-to-noise ratio subsets being obtained by grouping the signal-to-noise ratios in the at least two sets of original observation data based on values; and
perform an outlier test on the signal-to-noise ratios in the at least two sets of original observation data when the signal-to-noise ratios in the at least two sets of original observation data pass the unimodality test and the normality test, and delete the original observation data whose signal-to-noise ratio does not fall within a set outlier range, to obtain the observation data subset.

11. The apparatus according to claim 9, wherein the feature extraction module is configured to:
obtain at least one of a maximum signal-to-noise ratio, an average value, a median, and a standard deviation of signal-to-noise ratios in the observation data subset as the statistical feature.

12. The apparatus according to any one of claims 9 to 11, wherein the data processing module is configured to:
map a constellation type in the navigation positioning information to a corresponding navigation positioning system based on a conversion relationship between the constellation type and the navigation positioning system;
map a frequency in the navigation positioning information to a corresponding frequency point based on a conversion relationship among the navigation positioning system, the frequency, and the frequency point; and
use an index pair obtained by associating the navigation positioning system and the frequency point as the index.

13. The apparatus according to any one of claims 9 to 11, wherein the parameter fitting module is configured to:
determine a value of an inter-frequency-point difference parameter of the stochastic model by using signal-to-noise ratios in the observation data subset and the statistical feature;
convert the pre-constructed stochastic model into a weight model whose output value and signal-to-noise ratio are in a linear relationship, the weight model comprising the at least one model parameter; and
perform fitting on the weight model by using the signal-to-noise ratios in the observation data subset and the statistical feature, to obtain the value of the at least one model parameter.

14. The apparatus according to claim 10, wherein the feature extraction module is configured to:
cluster the signal-to-noise ratios in the at least two sets of original observation data, to obtain the at least two signal-to-noise ratio subsets;
determine a signal-to-noise ratio difference between cluster centers of every two signal-to-noise ratio subsets among the at least two signal-to-noise ratio subsets; and
determine that the signal-to-noise ratio fails the unimodality test when at least one signal-to-noise ratio difference is not less than a second set threshold; and determine that the signal-to-noise ratio passes the unimodality test when each signal-to-noise ratio difference is less than the second set threshold.

15. The apparatus according to claim 10, wherein the feature extraction module is configured to:
determine an initial kurtosis and initial skewness of the signal-to-noise ratio in the at least two sets of original observation data, the initial kurtosis being configured for reflecting sharpness of a normal distribution image of the signal-to-noise ratio, and the initial skewness being configured for reflecting a symmetry degree of the normal distribution image of the signal-to-noise ratio;
normalize the initial kurtosis and the initial skewness, respectively, to obtain a reference kurtosis and reference skewness; and
perform a normality test on the reference kurtosis and the reference skewness, to obtain a normality test result of the signal-to-noise ratios in the at least two sets of original observation data.

16. The apparatus according to claim 10, wherein when the signal-to-noise ratios in the at least two sets of original observation data fail at least one of the unimodality test and the normality test, the following operations are performed until the first set threshold reaches a preset maximum threshold or the signal-to-noise ratios in the at least two sets of original observation data pass the unimodality test and the normality test:
increasing the first set threshold by a set threshold increment; and
performing the unimodality test on the signal-to-noise ratios in the at least two sets of original observation data based on at least two signal-to-noise ratio subsets, and performing the normality test on the signal-to-noise ratios in the at least two sets of original observation data based on the initial kurtosis and initial skewness of the signal-to-noise ratios in the at least two sets of original observation data.

17. A computer device, comprising a processor and a memory, the memory having a program code stored therein, and when executed by the processor, the program code causing the processor to perform operations of the method according to any one of claims 1 to 8.

18. A computer-readable storage medium, comprising a program code, when running on a computer device, the program code being configured for causing the computer device to perform operations of the method according to any one of claims 1 to 8.

19. A computer program product, comprising computer instructions, the computer instructions, when executed by a processor, implementing operations in the method according to any one of claims 1 to 8.
